Europäisches Patentamt

European Patent Office

Office européen des brevets

(19)

(11) Veröffentlichungsnummer : **0 103 094 B1**

(12) **EUROPÄISCHE PATENTSCHRIFT**

(45) Veröffentlichungstag der Patentschrift :
30.10.85

(51) Int. Cl.⁴ : **A 01 B   1/22**

(21) Anmeldenummer : 83106635.2

(22) Anmeldetag : 07.07.83

(54) Kupplungshülse zum Anschluss an ein einen Schellkupplungsnippel aufweisendes Arbeitsgerät.

(30) Priorität : 17.08.82 DE 3230521

(43) Veröffentlichungstag der Anmeldung :
21.03.84 Patentblatt 84/12

(45) Bekanntmachung des Hinweises auf die Patenterteilung : 30.10.85 Patentblatt 85/44

(84) Benannte Vertragsstaaten :
AT BE CH DE FR GB IT LI LU NL SE

(56) Entgegenhaltungen :
DE-A- 2 617 621
FR-A- 1 355 656

(73) Patentinhaber : GARDENA Kress + Kastner GmbH
Lichternseestrasse 40 Postfach 27 47
D-7900 Ulm (Donau) (DE)

(72) Erfinder : Hepperle, Willi
Lonetalstrasse 42
D-7901 Westerstetten (DE)
Erfinder : Katzer, Johann
Nebelhornweg 9
D-7910 Neu-Ulm (DE)
Erfinder : Lopic, Franz
Sperberweg 10
D-7911 Nersingen (DE)
Erfinder : Stephany, Christian
Biberacher Strasse 76
D-7900 Ulm (Donau) (DE)
Erfinder : Sauer, Roland
Gersterstrasse 41
D-7900 Ulm-Gögglingen (DE)

(74) Vertreter : Patentanwälte Ruff und Beier
Neckarstrasse 50
D-7000 Stuttgart 1 (DE)

**Beschreibung**

Die Erfindung betrifft eine Kupplungshülse zum Anschluß an ein einen Schnellkupplungsnippel aufweisendes Arbeitsgerät, insbesondere Gartengerät, bei dem der Nippel zu seinem freien Ende hin im Querschnitt vorzugsweise stufenförmig abnimmt und mindestens im Bereich seines freien Endes im Querschnitt als regelmäßiges Sechseck ausgebildet ist, und wobei die Kupplungshülse einen Kupplungsabschnitt aufweist, in dem der Kupplungsnippel mit Hilfe eines Rastgliedes und am Umfang angreifenden Führungen spielfrei festlegbar ist.

Aus der DE-A-2 617 621 ist ein System verschiedener Gartengeräte bekannt, die jeweils aus Arbeitsgerät und lösbar damit verbundenem Stiel bestehen, wobei einem Stiel jeweils zahlreiche gleiche oder vorzugsweise verschiedene Arbeitsgeräte zugeordnet und der Stiel und die Arbeitsgeräte jeweils über eine manuell betätigbare Schnellkupplung miteinander verbindbar sind. Teile dieser Schnellkupplung bilden dabei einerseits eine an einem Stiel befestigte Kupplungshülse und andererseits ein dieser zugeordneter, am Arbeitsgerät befestigter Kupplungsnippel.

Das vorerwähnte Gerätesystem hat sich in der Praxis bestens bewährt. Es hat sich jedoch gezeigt, daß zumindest hinsichtlich einiger Arbeitsgeräte unter bestimmten Arbeitsbedingungen der Wunsch besteht, sie auch ohne längeren Stiel als Handgerät zu benutzen.

Der Erfindung liegt daher die Aufgabe zugrunde, eine Kupplungshülse zu schaffen, die den Einsatz eines mit einem Kupplungsnippel der eingangs beschriebenen Art ausgerüsteten Arbeitsgerätes als leicht in der Hand liegendes Handgerät ermöglicht. Die Kupplungshülse nach der DE-A-2 617 621 ist hierzu als Gerätehandgriff weniger geeignet.

Die vorerwähnte, der Erfindung zugrundeliegende Aufgabe wird durch eine Kupplungshülse gelöst, bei der an der Innenseite des Kupplungsabschnittes mindestens drei im wesentlichen parallele und achssymmetrische Führungsrippen vorgesehen sind, deren flache Oberseiten den Flächen des sechseckigen Nippelendes mit geringem Spiel zugeordnet sind und die sich über den Längsabschnitt der Hülse erstrecken, der der axialen Längserstreckung des sechseckigen Abschnittes des Nippels entspricht, und bei der das Rastglied am arbeitsgeräteseitigen freien Ende der Kupplungshülse angeordnet ist. Eine so ausgebildete Kupplungshülse bietet zum einen den Vorteil, daß sie eine einwandfreie Kupplung mit dem Nippel des Arbeitsgerätes gewährleistet und andererseits einen leicht in der Hand liegenden Handgriff bildet, der in seinem Griffbereich kein seine Handhabung beeinträchtigendes Rastglied aufweist. Darüber hinaus ist eine so ausgebildete Kupplungshülse billig in ihrer Herstellung und darüber hinaus leicht montierbar.

Das Rastglied der erfindungsgemäßen Kupplungshülse ist vorzugsweise so ausgebildet, daß es einen im wesentlichen zylindrischen Abschnitt des Kupplungsnippels zur spielfreien Halterung gegen die gegenüberliegende Wandung der Kupplungshülse drückt. Das dem Arbeitsgerät zugewandte Ende der Kupplungshülse kann dabei mit einer Schulter des Kupplungsnippels einen Anschlag in Einschubrichtung bilden, der nach Beendigung des Kupplungsvorganges im Zusammenspiel mit dem Rastglied eine axiale Verschiebung des Kupplungsnippels in der Kupplungshülse verhindert.

Das Rastglied kann zur axialen Sicherung des Nippels in Vertiefungen einführbar sein, die im zylindrischen Abschnitt des Kupplungsnippels vorgesehen sind. Vorzugsweise sind sechs derartige Vertiefungen gleichmäßig verteilt um den Umfang des Kupplungsnippels vorgesehen. Diese Vertiefungen und das Wirkende des Rastgliedes sind vorzugsweise konisch bzw. keilförmig ausgebildet, so daß sie zusammenwirkende Keilflächen zum Andrücken der Anschlagflächen von Kupplungshülse und Kupplungsnippel bilden, mit dem Vorteil, daß beim Andrücken der Anschlagflächen von Kupplungshülse und Kupplungsnippel eine beiderseitige Verkeilung und axiale Sicherung eintritt.

Bei einer bevorzugten Ausführungsform ist das Rastglied als eine radial wirkende Schraube ausgebildet, deren freies Ende vorzugsweise halbkugelförmig ausgebildet sein kann.

Das Radialspiel des sechsflächigen Abschnittes des Kupplungsnippels zwischen den Führungsrippen ist vorzugsweise geringer als das das Radialspiel des zylindrischen Abschnittes des Kupplungsnippels, in dem das das Rastglied aufweisend Hülsenende und der sechsflächige Nippelabschnitt zwischen den Führungsrippen zur Aufhebung des Radialspieles des freien Kupplungsendes durch radiale Verschiebung des zylindrischen Abschnittes mit Hilfe des Rastgliedes verklemmbar ist.

Die Kupplungshülse kann zumindest in ihrem dem Arbeitsgerät zugewandten Endbereich axial verlaufende Nuten aufweisen, die beim Festlegen des Kupplungsnippels der Aufnahme von zuvor in die Kupplungshülse gelangten Schmutzpartikeln dienen.

Die Kupplungshülsen-Wandung kann eine, vorzugsweise zwei gegenüberliegende Durchbrechungen aufweisen, mit dem Vorteil, daß aus ihnen in das Innere der Kupplungshülse gelangte Schmutzpartikel herausfallen können, so daß sie ein Festlegen des Kupplungsnippels nicht behindern.

Die erfindungsgemäße Kupplungshülse ist vorzugsweise als Handgriff ausgebildete, d. h. außen so gestaltet, daß sie dem Benutzer einen sicheren und bequemen Halt bietet.

Die erfindungsgemäße Kupplungshülse kann einen Teil eines Verlängerungsstieles bilden. Dieser Verlängerungsstiel kann an seinem vom Werkzeug abgewandten Ende eine Aufnahme zur Befestigung einer als Handgriff ausgebildeten Kupplungshülse der erfindungsgemäßen Art aufweisen, wobei diese Aufnahme als ein einen Anschlag aufweisender Fortsatz ausgebildet sein kann, der im Bereich des Rastgliedes eine Verjüngung aufweist.

Weitere Einzelheiten, Merkmale und Vorteile der Erfindung ergeben sich aus den Ansprüchen und der nachfolgenden Beschreibung einer bevorzugten Ausführungsform im Zusammenhang mit der Zeichnung.

In der Zeichnung zeigen jeweils schematisch :

Figur 1 eine Seitenansicht eines mit einem Kupplungsnippel versehenen Arbeitsgerätes,

Figur 2 eine teilweise geschnittene Seitenansicht einer als Handgriff ausgebildeten Kupplungshülse gemäß der Erfindung, teilweise im Schnitt,

Figur 3 eine vergrößerte Darstellung der in Fig. 2 dargestellten Kupplungshülse im Schnitt,

Figur 4 einen Schnitt entlang der Linie IV-IV in Fig. 3 und

Figur 5 einen Verlängerungsstiel.

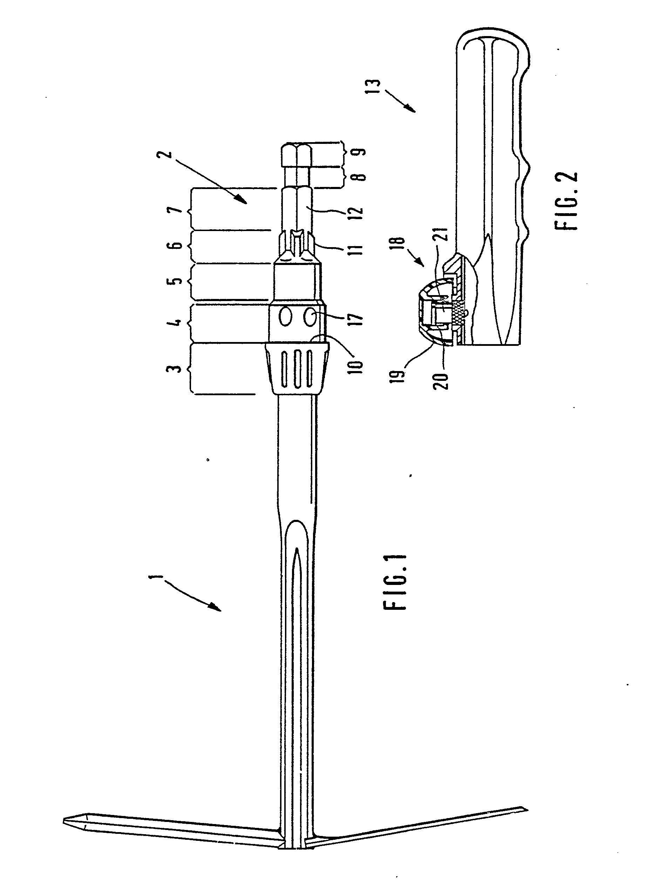

Bei dem in Fig. 1 dargestellten Arbeitsgerät 1 handelt es sich um eine leichte Hacke, die einen fest mit ihr verbundenen Kupplungsnippel 2 aufweist.

Der Kupplungsnippel 2 weist mehrere Abschnitte 3 bis 9 auf, die sich einerseits in der Zweckbestimmung und andererseits in der Querschnittsform und Größe unterscheiden. Der arbeitsgeräteseitige, in Fig. 1 links dargestellte erste Nippelabschnitt 3 ist im wesentlichen kegelstumpfförmig ausgebildet, so daß er zum freien Nippelende hin im Querschnitt zunimmt. An den ersten Nippelabschnitt 3 schließt sich in Richtung auf das freie Nippelende hin ein zweiter Nippelabschnitt 4 an, der im wesentlichen zylinderförmig ausgebildet ist. Sein Durchmesser ist deutlich kleiner, als der größte Durchmesser des ersten Nippelabschnittes 3, so daß im Obergang zwischen dem ersten Nippelabschnitt 3 und dem zweiten Nippelabschnitt 4 eine Schulter 10 vorgesehen ist, die für den Kupplungsnippel 2 einen Anschlag in Einschubrichtung bildet. An den zweiten Kupplungsabschnitt 4 schließt sich zum freien Nippelende hin ein dritter Nippelabschnitt 5 an, der im wesentlichen zylindrisch ausgebildet ist. Der Durchmesser dieses Nippelabschnittes 5 ist kleiner als der des benachbarten zweiten Nippelabschnittes 4. An den dritten Nippelabschnitt 5 schließt sich zum freien Nippelende hin ein vierter Nippelabschnitt 6 an, in dem sechs gleichmäßig um den Umfang verteilt angeordnete Rippen 11 vorgesehen sind. Die Rippen 11 sind einstückig mit einem Sechskantstab 12 ausgebildet, auf dessen Kanten sie angeordnet sind. Der Sechskantstab 12 weist durchgehend den gleichen regelmäßig sechseckigen Querschnitt auf und ist länger als die Rippen 11 ; sein zum freien Nippelende hin vorstehender Bereich bildet einen weiteren Nippelabschnitt 7. An diesen Nippelabschnitt 7 schließt sich ein kurzer Nippelabschnitt 8 an, der, wie der vorangegangene Nippelabschnitt 7, ebenfalls einen durchgehend sechseckigen, jedoch gegenüber dem vorangegangenen Nippelabschnitt 7 einen kleineren Querschnitt aufweist. An den Nippelabschnitt 8 schließt sich schließlich ein bis zum freien Nippelende hin reichender weiterer Nippelabschnitt 9 an, der in Querschnittsform und -größe dem Nippelabschnitt 7 entspricht.

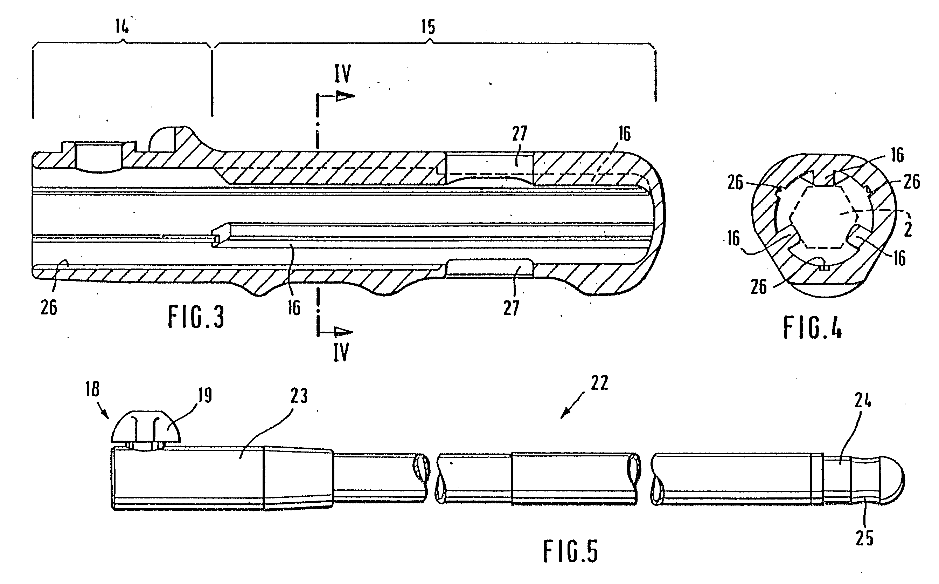

In Fig. 2 ist eine zum Arbeitsgerät in Fig. 1 passende, als Handgriff ausgebildete Kupplungshülse 13 dargestellt. Fig. 3 zeigt diese Hülse in vergrößertem Maßstab. Die Hülse 13 ist hohl und im Inneren so ausgebildet, daß der Kupplungsnippel 2 des Arbeitsgerätes 1 mit seinen Abschnitten 4 bis 9 in das Hülseninnere eingeschoben und dort festgelegt werden kann. Den Nippelabschnitten 4 und 5 ist im Inneren der Hülse 13 ein Hülsenabschnitt 14 zugeordnet, der im wesentlichen zylinderförmig ausgebildet ist und einen Durchmesser aufweist, der dem Durchmesser des zweiten Nippelabschnittes 4 im wesentlichen entspricht. An den Hülsenabschnitt 14 schließt sich im Inneren der Hülse 13 bis zu deren rückwärtigen Ende ein Hülsenabschnitt 15 an, in dem drei parallele und symmetrisch zur Längsachse der Hülse 13 verlaufende Führungsrippen 16 vorgesehen sind, die mit der Hülsenwandung einstückig ausgebildet sind. Die Führungsrippen 16 entsprechen im Querschnitt dem eines aufrechtstehenden Rechtecks. Die Führungsrippen 16 sind so angeordnet und ihre Höhe ist so bemessen, daß ihre in das Innere der Kupplungshülse 13 weisende Schmalseiten jeweils an einer der sechs Seitenflächen der Nippelabschnitte 7 und 9 anliegen, sobald der Kupplungsnippel 2 in das Innere der Kupplungshülse 13 eingeschoben ist.

Der zweite Nippelabschnitt 4 weist sechs gleichmäßig um seinen Umfang verteilte Vertiefungen 17 auf, die im wesentlichen halbkugelförmig ausgebildet sind.

Im Bereich des arbeitsgeräteseitigen freien Endes der Kupplungshülse 13 ist ein als radial wirkende Schraube ausgebildetes Rastglied 18 vorgesehen, das einen manuell leicht betätigbaren Drehknopf 19 aufweist. Der Drehknopf 19 weist einen inneren zylindrischen Teil 20 auf, dessen zumindest bereichsweise nach innen gezogener Rand den nach außen umgebogenen Rand eines Zylinders 21 hintergreift, der mit der Wandung der Kupplungshülse 13 fest verbunden ist, mit der Folge, daß das Rastglied 18 auch dann unverlierbar ist, wenn es durch Betätigung des Drehknopfes 19 völlig außer Eingriff mit dem in das Innere der Kupplungshülse 13 eingeschobenen Kupplungsnippel gebracht worden ist.

Das radial wirkende Rastglied 18 ist so angeordnet, daß es mit einer der sechs Vertiefungen 17 im Abschnitt 4 des Kupplungsnippels 2 fluchtet, sobald dieser so weit in die Kupplungshülse 13 eingeschoben ist, daß seine Schulter 10 am arbeitsgeräteseitigen Ende der Kupplungshülse 13 anschlägt. Wird jetzt das Rastglied 18, d. h. dessen Drehknopf 19 betätigt, so kommt die Spitze der radial wirkenden Rastgliedschraube mit einer der Vertiefungen 17 in Eingriff. Das Zusammenwirken zwischen dem vorzugsweise halbkugelförmig ausgebildeten freien Ende der Rastgleidschraube mit der halbkugelförmig ausgebildeten Vertiefung bewirkt, daß der Kupplungsnippel 2 bis zum Anschlag seiner Schulter 10 in die Kupplungshülse 13 gezogen wird und im Inneren der Hülse 13 axial gesichert ist.

Für eine drehsichere Verbindung zwischen dem Kupplungsnippel 2 und der Kupplungshülse 13 sorgt einerseits das Zusammenwirken der Führungsrippen 16 mit jeweils einer der sechs Außenflächen der Nippelabschnitte 7 und 9 und andererseits das Zusammenwirken der Führungsrippen 16 mit den kurzen Rippen 11 des Nippelabschnittes 6.

In Fig. 5 ist ein relativ kurzer Verlängerungsstiel 22 dargestellt, der im wesentlichen rohrförmig ausgebildet ist. An seinem einen, in der Zeichnung nach links weisenden Ende trägt dieser Verlängerungsstiel 22 eine Kupplungshülse 23, die im wesentlichen der Kupplungshülse nach Fig. 2 entspricht, an ihrem vom Arbeitsgerät abgewandten, in Fig. 5 nach rechts weisenden Endbereich ist jedoch eine Aufnahme vorgesehen, in der der Verlängerungsstiel 22 eingeführt und befestigt ist. An seinem vom Arbeitsgerät abgewandten, in Fig. 5 nach rechts weisenden Ende weist der Verlängerungsstiel 22 einen Fortsatz 24 mit einer rundumlaufenden Verjüngung 25 auf. Der Abstand der Verjüngung 25 zum freien Fortsatzende entspricht dem Abstand des Rastgliedes 18 vom arbeitsgerätseitigen Kupplungshülsen-Ende, so daß auf den Fortsatz 24 eine Kupplungshülse nach Fig. 2 aufgeschoben und durch Betätigung des Rastgliedes gesichert werden kann. Der Verlängerungsstiel 22 bietet den Vorteil, daß ein mit einer Kupplungshülse gemäß Fig. 2 ausgerüstetes Arbeitsgerät gemäß Fig. 1 ohne großen technischen Aufwand in ein Stielgerät umgewandelt werden kann. Hierzu ist nur die Kupplungshülse 13 nach Lösen des Rastgliedes 18 vom Arbeitsgerät 1 abzuziehen und die Kupplungshülse 23 des Verlängerungsstiels 22 auf den Kupplungsnippel 2 des Arbeitsgerätes 1 aufzuschieben und dann dessen Rastglied zu betätigen. Um zu vermeiden, daß die als Handgriff ausgebildete Kupplungshülse 13 verloren geht, kann diese anschließend auf den Fortsatz 24 des Verlängerungsstiels 22 aufgeschoben und dort durch Betätigung des Rastgliedes gesichert werden.

Die Kupplungshülsen 13, 23 können zumindest in ihrem, dem Arbeitsgerät 1 abgewandten Endbereich axial verlaufende Nuten 26 aufweisen, die der Aufnahme von Schmutz beim Festlegen des Kupplungsnippels 2 dienen. Ihre Wandung kann zudem oder stattdessen mindestens eine, vorzugsweise zwei gegenüberliegende Durchbrechungen 27 aufweisen, durch die in das Hülseninnere eingebrachte Schmutzpartikel herausfallen können. Die Durchbrechungen 27 (vgl. Fig. 3) können zudem so angeordnet und gegeneinander ausgerichtet sein, daß sie der Anbringung einer Halteschlaufe oder der Durchführung eines Wandhakens dienen können.

## Patentansprüche

1. Kupplungshülse (13) zum Anschluß an ein einen Schnellkupplungsnippel (2) aufweisendes Arbeitsgerät (1), insbesondere Gartengerät, bei dem der Nippel (2) zu seinem freien Ende hin im Querschnitt vorzugsweise stufenförmig abnimmt und mindestens im Bereich seines freien Endes im Querschnitt als regelmäßiges Sechseck (12) ausgebildet ist, und wobei die Kupplungshülse (13) einen Kupplungsabschnitt (14, 15) aufweist, in dem der Kupplungsnippel (2) mit Hilfe eines Rastgliedes (18) und am Umfang angreifenden Führungen (16) spielfrei festlegbar ist, dadurch gekennzeichnet, daß an der Innenseite des Kupplungsabschnittes (14, 15) mindestens drei im wesentlichen parallele und achssymmetrische Führungsrippen (16) vorgesehen sind, deren flache Oberseiten den Flächen des sechseckigen Kupplungsendes (6, 7, 9) mit geringem Spiel zugeordnet sind und die sich über den Längsabschnitt (15) der Hülse (13, 23) erstrecken, der der axialen Längserstreckung des sechseckigen Abschnittes (6, 7, 9) des Nippels (2) entspricht und daß das Rastglied (18) am geräteseitigen freien Ende der Kupplungshülse (13, 23) angeordnet ist.

2. Kupplungshülse nach Anspruch 1, dadurch gekennzeichnet, daß das Rastglied (18) einen im wesentlichen zylindrischen Abschnitt (4) des Kupplungsnippels (2) zur spielfreien Halterung gegen die gegenüberliegende Wandung der Kupplungshülse (13, 23) drückt.

3. Kupplungshülse nach einem der vorhergehenden Ansprüche, dadurch gekennzeichnet, daß das dem Arbeitsgerät (1) zugewandte Ende der Kupplungshülse (13, 23) mit einer Schulter (10) des Kupplungsnippels (2) einen Anschlag in Einschubrichtung bildet.

4. Kupplungshülse nach einem der vorhergehenden Ansprüche, dadurch gekennzeichnet, daß das Rastglied (18) zur axialen Sicherung des Nippels (2) in Vertiefungen (17) im zylindrischen Abschnitt (4) des Kupplungsnippels (2) einführbar ist.

5. Kupplungshülse nach Anspruch 4, dadurch gekennzeichnet, daß die Vertiefungen (17) und das Wirkende des Rastgliedes (18) konisch bzw. keilförmig ausgebildet sind und zusammenwirkende Keilflächen zum Andrücken der Anschlagflächen von Kupplungshülse (13, 23) und Kupplungsnippel (2) bilden.

6. Kupplungshülse nach einem der vorhergehenden Ansprüche, dadurch gekennzeichnet, daß das Rastglied (18) eine radial wirkende Schraube ist, deren freies Ende vorzugsweise halbkugelförmig ausgebildet ist.

7. Kupplungshülse nach einem der vorhergehenden Ansprüche, dadurch gekennzeichnet, daß das Radialspiel des sechseckigen Abschnittes (6, 7, 9) des Kupplungsnippels (2) zwischen den Führungsrippen (16) geringer ist als das Radialspiel des zylindrischen Abschnittes (4) des Kupplungsnippels (2), in dem das das Rastglied (18) aufweisende Hülsenende und der sechsflächige Nippelabschnitt (6, 7, 9) zwischen den Führungsrippen (16) zur Aufhebung des Radialspieles des freien Nippelendes durch radiale Verschiebung des zylindrischen Abschnittes (4) mit Hilfe des Rastgliedes (18) verklemmbar ist.

8. Kupplungshülse, dadurch gekennzeichnet, daß sie zumindest in ihrem dem Arbeitsgerät zugewandten Endbereich axial verlaufende Nuten (26) aufweist, die der Aufnahme von Schmutz beim Festlegen des Kupplungsnippels (2) dienen.

9. Kupplungshülse nach einem der vorhergehenden Ansprüche, dadurch gekennzeichnet, daß die Kupplungshülsen-Wandung mindestens eine, vorzugsweise zwei gegenüberliegende Durchbrechungen (27) aufweist.

10. Kupplungshülse nach einem der vorhergehenden Ansprüche, dadurch gekennzeichnet, daß die Kupplungshülse (13) als Handgriff ausgebildet ist.

11. Kupplungshülse nach einem der vorhergehenden Ansprüche, dadurch gekennzeichnet, daß die Kupplungshülse (23) Teil eines Verlängerungsstieles (22) ist.

12. Kupplungshülse nach Anspruch 11, dadurch gekennzeichnet, daß der Verlängerungsstiel (22) an seinem vom Arbeitsgerät (1) abgewandten Ende eine Aufnahme (24) zur Befestigung einer als Handgriff ausgebildeten Kupplungshülse (13) aufweist.

13. Kupplungshülse nach Anspruch 12, dadurch gekennzeichnet, daß die Aufnahme (24) als ein einen Anschlag aufweisender Fortsatz ausgebildet ist, der im Bereich des Rastgliedes (18) mindestens eine Vertiefung, vorzugsweise eine ringförmige Verjüngung (25) aufweist.

**Claims**

1. Coupling sleeve (13) for attachment to a working tool (1), particularly a gardening tool, having a snap action coupling nipple (2), the cross-section of the latter decreasing in preferably step-like manner towards its free end and at least in the vicinity of the free end is cross-sectionally constructed a regular hexagon (12), and in which the coupling sleeve (13) has a coupling portion (14, 15), in which the coupling nipple (2) is fixed in clearance-free manner with the aid of a locking member (18) and guides (16) acting on the periphery, characterized in that at least three substantially parallel and axially symmetrical guide ribs (16) are provided on the inside of the coupling portion (14, 15) and their free top surfaces are associated with a limited clearance with the surfaces of the hexagonal coupling end (6, 7, 9) and which extend over the longitudinal portion (15) of sleeve (13, 23) corresponding to the axial longitudinal extension of the hexagonal portion (6, 7, 9) of nipple (2), and that the locking member (18) is positioned on the toolside free end of the coupling sleeve (13, 23).

2. Coupling sleeve according to claim 1, characterized in that the locking member (18) presses a substantially cylindrical portion (4) of coupling nipple (2) against the opposite wall of the coupling sleeve (13, 23) for securing in the clearance-free manner.

3. Coupling sleeve according to one of the preceding claims, characterized in that the end of the coupling sleeve (13, 23) facing the working tool (1) forms, with a shoulder (10) of the coupling nipple (2), a stop in the slide-in direction.

4. Coupling sleeve according to one of the preceding claims, characterized in that for the axial securing of nipple (2), locking member (18) can be inserted in depression (17) in the cylindrical portion (4) of coupling nipple (2).

5. Coupling sleeve according to claim 4, characterized in that the depression (17) and the working end of locking member (18) are constructed conically or in wedge-shaped manner and form cooperating wedge surfaces for pressing together the stop faces of coupling sleeve (13, 23) and coupling nipple (2).

6. Coupling sleeve according to one of the preceding claims, characterized in that the locking member (18) is a radially acting screw, whose free end is preferably hemispherical.

7. Coupling sleeve according to one of the preceding claims, characterized in that the radial clearance of the hexagonal portion (6, 7, 9) of coupling nipple (2) between the guide ribs (16) is smaller than the radial clearance of the cylindrical portion (4) of coupling nipple (2) in the sleeve end having the locking member (18) and the hexagonal nipple portions (6, 7, 9) can be jammed between the guide ribs (16) for eliminating the radial clearance of the free nipple end by radial displacement of the cylindrical portion (4) with the aid of locking member (18).

8. Coupling sleeve, characterized in that at least in its end region facing the working tool it has axially directed slots (26) for receiving dirt on fixing the coupling nipple (2).

9. Coupling sleeve according to one of the preceding claims, characterized in that the coupling sleeve wall has at least one and preferably two facing openings (27).

10. Coupling sleeve according to one of the preceding claims, characterized in that the coupling sleeve (13) is constructed as a handle.

11. Coupling sleeve according to one of the preceding claims, characterized in that coupling sleeve (23) is part of an extension handle (22).

12. Coupling sleeve according to claim 11, characterized in that the extension handle (22) is provided at its end remote from the working tool (1) with a mounting (24) for fixing a coupling sleeve (13) constructed as a handle.

13. Coupling sleeve according to claim 12, characterized in that the mounting (24) is constructed as an extension having a stop and which is provided in the vicinity of locking member (18) with at least one depression, preferably an annular taper cone (25).

**Revendications**

1. Manchon d'accouplement (13) pour la jonction à un outil de travail (1) présentant un raccord à accouplement rapide (2), en particulier un outil de jardinage dans lequel le raccord (2) décroît de section vers son extrémité libre, de préférence en forme de gradin, et dont la section est réalisée sous forme d'un hexagone régulier (12) au moins au voisinage de son extrémité libre, ledit manchon d'accouplement (13) comportant une zone d'accouplement (14, 15) dans laquelle le raccord d'accouplement (2) peut être verrouillé à demeure sans aucun jeu, à l'aide d'un organe encliquetable (18) et de guides (16) venant en prise sur le pourtour, caractérisé par le fait qu'au moins trois nervures de guidage (16), sensiblement parallèles et symétriques par rapport à l'axe, sont prévues à la face interne de la zone d'accouplement (14, 15), nervures dont les faces supérieures aplaties sont associées avec faible jeu aux surfaces de l'extrémité hexagonale d'accouplement (6, 7, 9), et qui s'étendent sur la zone longitudinale (15) du manchon (13, 23) correspondant à l'étendue longitudinale axiale de la région hexagonale (6, 7, 9) du raccord (2) ; et par le fait que l'organe encliquetable (18) se trouve à l'extrémité libre du manchon d'accouplement (13, 23) située du côté de l'outil de travail.

2. Manchon d'accouplement selon la revendication 1, caractérisé par le fait que l'organe encliquetable (18) presse une région sensiblement cylindrique (4) du raccord d'accouplement (2), en vue d'une retenue sans aucun jeu, contre la paroi opposée du manchon d'accouplement (13, 23).

3. Manchon d'accouplement selon l'une des revendications précédentes, caractérisé par le fait que l'extrémité de ce manchon d'accouplement (13, 23) tournée vers l'outil de travail (1) forme, avec un épaulement (10) du raccord d'accouplement (2), une butée dans la direction de l'insertion.

4. Manchon d'accouplement selon l'une des revendications précédentes, caractérisé par le fait que, en vue de l'arrêt axial du raccord (2), l'organe encliquetable (18) est insérable dans des renfoncements (17) ménagés dans la région cylindrique (4) du raccord d'accouplement (2).

5. Manchon d'accouplement selon la revendication 4, caractérisé par le fait que les renfoncements (17) et l'extrémité efficace de l'organe encliquetable (18) sont de configuration respectivement tronconique ou cunéiforme, et forment des surfaces cunéiformes associées pour presser les surfaces de butée du manchon d'accouplement (13, 23) et du raccord d'accouplement (2).

6. Manchon d'accouplement selon l'une des revendications précédentes, caractérisé par le fait que l'organe encliquetable (18) consiste en une vis agissant dans le sens radial et dont l'extrémité libre est, de préférence, de forme hémisphérique.

7. Manchon d'accouplement selon l'une des revendications précédentes, caractérisé par le fait que le jeu radial de la région hexagonale (6, 7, 9) du raccord d'accouplement (2) entre les nervures de guidage (16) est plus faible que le jeu radial de la région cylindrique (4) de ce raccord d'accouplement (2), du fait que l'extrémité du manchon munie de l'organe encliquetable (18) et la région à six pans (6, 7, 9) du raccord peuvent être emprisonnées entre les nervures de guidage (16) à l'aide de l'organe encliquetable (18), afin de supprimer le jeu radial de l'extrémité libre du raccord par un coulissement radial de ladite région cylindrique (4).

8. Manchon d'accouplement, caractérisé par le fait qu'il présente, au moins dans sa zone extrême tournée vers l'outil de travail, des gorges (26) qui s'étendent axialement et servent à recueillir de la crasse au cours de l'assujettissement du raccord d'accouplement (2).

9. Manchon d'accouplement selon l'une des revendications précédentes, caractérisé par le fait que la paroi de ce manchon d'accouplement comporte un, de préférence deux évidements opposés (27).

10. Manchon d'accouplement selon l'une des revendications précédentes, caractérisé par le fait que ce manchon d'accouplement (13) est réalisé en tant que poignée.

11. Manchon d'accouplement selon l'une des revendications précédentes, caractérisé par le fait que ce manchon d'accouplement (23) forme une partie d'un manche prolongateur (22).

12. Manchon d'accouplement selon la revendication 11, caractérisé par le fait que le manche prolongateur (22) possède, à son extrémité tournée à l'opposé de l'outil de travail (1), un logement (24) servant à la fixation d'un manchon d'accouplement (13) réalisé sous la forme d'une poignée.

13. Manchon d'accouplement selon la revendication 12, caractérisé par le fait que le logement (24) est réalisé en tant qu'appendice présentant une butée et comportant au moins un renfoncement, de préférence une décroissance annulaire de section (25) au voisinage de l'organe encliquetable (18).

FIG.1

FIG.2

0 103 094

FIG.3

FIG.4

FIG.5